# EUROPEAN PATENT APPLICATION

(11) **EP 4 822 949 A1**
(43) Date of publication of application: **14.10.2026**
(21) Application number: 24899509.4
(22) Date of filing: 25.10.2024
(51) Int. Cl.: H02K 1/2706

(54) **ROTOR ASSEMBLY, MOTOR, AIR SUPPLY ASSEMBLY, AND AIR TREATMENT DEVICE**

(30) Priority: 06.12.2023 CN 202311670627
(71) Applicant: Guangdong Welling Motor Manufacturing Co., Ltd., Foshan, Guangdong 528311 (CN); Guangdong Meizhi Compressor Co., Ltd., Foshan, Guangdong 528311 (CN); Guangdong Meizhi Precision-Manufacturing Co., Ltd., Foshan, Guangdong 528303 (CN)
(72) Inventor: JIA, Wuhao, Foshan, Guangdong 528311 (CN); MAO, Linshu, Foshan, Guangdong 528311 (CN); XU, Fei, Foshan, Guangdong 528311 (CN); CHENG, Yunfeng, Foshan, Guangdong 528311 (CN)
(74) Representative: Ran, Handong
(86) International application number: PCT/CN2024/127383
(87) International publication number: WO 2025/118866

(57) **Abstract**

Disclosed in the present application are a rotor assembly, a motor, an air supply assembly, and an air treatment device. The rotor assembly (200) comprises a rotor iron core (210) and permanent magnets (230), the rotor iron core (210) comprising an inner iron core (211) and an outer iron core (212), and the outer iron core (212) comprising a plurality of iron core units (2121) arranged around the inner iron core (211). Each iron core unit (2121) comprises a plurality of iron core lamination pieces (213) stacked in a first direction, the first direction (y) being parallel to the axis of rotation (20). In the first direction (y), the thickness dimension of iron core lamination pieces (213) having the smallest thickness is Ts. Two of the plurality of permanent magnets (230) are a first permanent magnet (230a) and a second permanent magnet (230b), the first permanent magnet (230a) having a first wall surface (233) facing the second permanent magnet (230b), and the second permanent magnet (23b) having a second wall surface (234) facing the first permanent magnet (230a), wherein the maximum distance D1 from the first wall surface (233) to the second wall surface (234) and the maximum distance Wm between the two sides of the first wall surface (233) in the circumferential direction satisfy a certain dimensional requirement.

## Description

### CROSS-REFERENCE TO RELATED APPLICATION

This application claims priority to Chinese Patent Application No. 202311670627.3, filed on December 6, 2023, and entitled "ROTOR ASSEMBLY, MOTOR, AIR SUPPLY ASSEMBLY, AND AIR TREATMENT DEVICE," the entire contents of which are incorporated herein by reference for all purposes.

### TECHNICAL FIELD

The present disclosure relates to the technical field of electrically driven devices, and in particular, to a rotor assembly, a motor, an air supply assembly, and an air treatment device.

### BACKGROUND

In a split rotor assembly, the rotor core of the rotor assembly includes an inner core and an outer core that are disconnected from each other. The outer core includes a plurality of core segments arranged circumferentially around the inner core. The core segments are spaced apart from each other along an axis of a rotation axis of the rotor assembly, and a permanent magnet is disposed between every two adjacent core segments. In the related art, the magnetic flux leakage is prone to occur at the end member of each core segment proximate to the rotation axis, thereby reducing the power density of the motor.

### SUMMARY

To this end, the present disclosure aims to provide a rotor assembly, a motor, an air supply assembly, and an air treatment device to at least partially solve any of the above technical problems.

In accordance with a first aspect of the present disclosure, an embodiment provides a rotor assembly configured to rotate about a rotation axis. The rotor assembly includes a rotor core and N permanent magnets.

The rotor core has an inner core and an outer core disconnected from the inner core. The outer core includes a plurality of core segments spaced apart from each other. The core segments are arranged around the inner core along a circumferential direction of the rotation axis. Each core segment includes a plurality of core laminations stacked along a first direction parallel to the rotation axis. The thinnest core lamination among the plurality of core laminations has a thickness Ts along the first direction. A mounting slot is formed between every two adjacent core segments.

N ≥ 4. Each permanent magnet is disposed in a corresponding one of the mounting slots. Any two of the permanent magnets located on opposite sides of the rotation axis along a second direction perpendicular to the rotation axis are a first permanent magnet and a second permanent magnet. The first permanent magnet has a first wall surface facing the second permanent magnet. The second permanent magnet has a second wall surface facing the first permanent magnet.

A maximum distance D₁ between the first wall surface and the second wall surface and a maximum width Wm of the first wall surface along the circumferential direction satisfy the following relationship: $Wm = \frac{π \times {D}_{1} - K \times N \times Ts}{N} ,$ where 1 ≤ K ≤ 5.

In some embodiments, the inner core is annular and surrounds the rotation axis. The inner core has a first inner peripheral wall near the rotation axis and a first outer peripheral wall away from the rotation axis. Along the second direction, a maximum width Wr between the first inner peripheral wall and the first outer peripheral wall satisfies Wr ≥ 2 × Ts.

In some embodiments, the maximum width Wr between the first inner peripheral wall and the first outer peripheral wall along the second direction satisfies Wr ≥ 2.5 mm.

In some embodiments, a minimum width Wa between each core segment and the inner core along a radial direction of the rotor assembly satisfies Wa ≥ 2 × Ts.

In some embodiments, the minimum width Wa between each core segment and the inner core satisfies along the radial direction Wa ≥ 2.5 mm.

In some embodiments, each core segment has a third wall surface on one side of the core segment in the circumferential direction. The third wall surface is provided with a limit protrusion adapted to abut against a side wall of the permanent magnet facing away from or toward the rotation axis. A maximum length L₁ from an end of the limit protrusion away from the third wall surface to the third wall surface satisfies L₁ ≥ Ts.

In some embodiments, a minimum length L₂ between a side edge of the limit protrusion facing the rotation axis and a side edge of the limit protrusion facing away from the rotation axis satisfies L₂ ≥ Ts.

In some embodiments, a first core segment and a second core segment among the core segments form the mounting slot therebetween. The first core segment has a first end member away from the rotation axis, and the second core segment has a second end member away from the rotation axis. A minimum length L₃ between the first end member and the second end member satisfies L₃ ≤ 0.6 × Wm, or 0.4 × Wm ≤ L₃ ≤ 0.6 × Wm.

In some embodiments, the first core segment and the second core segment form the mounting slot therebetween. The first core segment has a fourth wall surface facing the second core segment. The fourth wall surface is provided with a first limit protrusion and a second limit protrusion. The second core segment has a fifth wall surface facing the first core segment. The fifth wall surface is provided with a third limit protrusion and a fourth limit protrusion. The first and third limit protrusions are configured to abut against a side wall of the permanent magnet facing away from the rotation axis. The second and fourth limit protrusions are configured to abut against a side wall of the permanent magnet facing the rotation axis. A minimum length between the first and third limit protrusions is L₄, and a minimum length between the second and fourth limit protrusions is L₅, and L₅ ≥ L₄.

In some embodiments, the first limit protrusion is located at an end of the fourth wall surface away from the rotation axis, and the second limit protrusion is located at an end of the fourth wall surface near the rotation axis. The third limit protrusion is located at an end of the fifth wall surface away from the rotation axis, and the fourth limit protrusion is located at an end of the fifth wall surface near the rotation axis.

In some embodiments, the permanent magnet protrudes from one or both ends of the mounting slot along the first direction.

In some embodiments, each core segment has a third wall surface in contact with the permanent magnet. The third wall surface defines a first trench for injection molding extending through the core segment along the first direction.

In some embodiments, the rotor assembly further includes a first injection-molded member that connects the outer core and the inner core by filling a gap therebetween.

In accordance with a second aspect of the present disclosure, an embodiment provides a motor, including:
the rotor assembly according to any of the above embodiments, and
a stator assembly arranged to surround the rotor assembly.

In some embodiments, the stator assembly includes a stator core and a coil winding connected to the stator core. The stator core has a second outer peripheral wall provided with a second trench for injection molding.

In some embodiments, the stator assembly further includes a second injection-molded member encapsulating the stator core and the coil winding.

In accordance with a third aspect of the present disclosure, an embodiment provides an air supply assembly, including the motor according to any of the above embodiments.

In accordance with a fourth aspect of the present disclosure, an embodiment provides an air treatment device, including the air supply assembly according to any of the above embodiments.

### BRIEF DESCRIPTION OF DRAWINGS

For a clearer illustration of the technical schemes of the embodiments of the present disclosure or the related art, a brief introduction will be given below to the accompanying drawings that are required to be used in the description of the embodiments or the related art. Obviously, the drawings described below are merely some embodiments of the present disclosure. For those of ordinary skill in the art, other drawings may be obtained based on the structures shown in these drawings without creative effort.
FIG. 1 is a side schematic view of a combination of core segments and permanent magnets in a rotor assembly according to an embodiment of the present disclosure, as viewed from a perspective parallel to a first direction;
FIG. 2 is a side schematic view of a permanent magnet assembly according to an embodiment of the present disclosure, as viewed from a perspective parallel to the first direction;
FIG. 3 is a side schematic view of core segments according to an embodiment of the present disclosure, as viewed from a perspective parallel to the first direction;
FIG. 4 is an enlarged schematic view of portion A1 in FIG. 3;
FIG. 5 is an enlarged schematic view of portion A2 in FIG. 3;
FIG. 6 is a side schematic view of a core lamination according to an embodiment of the present disclosure, as viewed from a perspective parallel to the first direction;
FIG. 7 is an enlarged schematic view of portion A3 in FIG. 6;
FIG. 8 is a perspective schematic view of a stack of core laminations according to an embodiment of the present disclosure;
FIG. 9 is a side schematic view of an inner core according to an embodiment of the present disclosure, as viewed from a perspective parallel to the first direction;
FIG. 10 is a perspective schematic view of a rotor assembly according to an embodiment of the present disclosure;
FIG. 11 is a side schematic view of an electric motor assembly of a stator core, rotor cores and permanent magnets according to an embodiment of the present disclosure, as viewed from a perspective parallel to the first direction;
FIG. 12 is a side schematic view of a stator core according to an embodiment of the present disclosure, as viewed from a perspective parallel to the first direction;
FIG. 13 is an enlarged schematic view of portion A4 in FIG. 12;
FIG. 14 is a bar chart showing a relationship between L₃/Wm and a per unit value of a no-load back electromotive force (EMF), and a line chart showing a relationship between L₃/Wm and a demagnetization rate, according to an embodiment of the present disclosure;
FIG. 15 is a line chart showing a relationship between Wm and a demagnetization current according to an embodiment of the present disclosure; and
FIG. 16 is a graph showing a motor efficiency as a function of D₂/D₃ according to an embodiment of the present disclosure, wherein a high-speed heavy-load efficiency curve, a low-speed light-load efficiency curve, and a comprehensive average efficiency curve of the motor are shown.

### Reference Numerals:

motor 10;
stator assembly 100;
stator core 110; yoke 111; second trench for injection molding 1111; limit member 1112; tooth 112; third end member 1121; fourth end member 1122; tenth wall surface 1123; eleventh wall surface 1124; boundary line 1125; first tooth 112a; second tooth 112b;
rotor assembly 200;
rotor core 210; inner core 211; first inner peripheral wall 2111; first outer peripheral wall 2112; outer core 212; core segment 2121; first end member 21211; second end member 21212; first limit protrusion 21213; third limit protrusion 21214; second limit protrusion 21215; fourth limit protrusion 21216; first trench for injection molding 21217; core lamination 213; mounting slot 214; third wall surface 215; fourth wall surface 216; fifth wall surface 217; limit protrusion 218; first core segment 2121a; second core segment 2121b;
first injection-molded member 220;
permanent magnet 230; eighth wall surface 231; ninth wall surface 232; first wall surface 233; second wall surface 234; sixth wall surface 235; seventh wall surface 236; first permanent magnet 230a; second permanent magnet 230b;
rotation axis 20; and
first direction y; second direction x; circumferential direction m.

The realization of the objectives, functional features and advantages of the present disclosure will be further described in conjunction with the embodiments and with reference to the accompanying drawings.

### DETAILED DESCRIPTION

The technical schemes in the embodiments of the present disclosure will be clearly and completely described below with reference to the accompanying drawings in the embodiments of the present disclosure. It is apparent that the described embodiments are merely some, not all, of the embodiments of the present disclosure. All other embodiments obtained by a person of ordinary skill in the art based on the embodiments described herein without creative efforts shall fall within the scope of the present disclosure.

In a split rotor assembly, the rotor core of the rotor assembly includes an inner core and an outer core disconnected from the inner core. The outer core includes a plurality of core segments arranged circumferentially around the inner core. The core segments are spaced apart from each other along an axis of a rotation axis of the rotor assembly, and a permanent magnet is disposed between every two adjacent core segments. In the related art, the magnetic flux leakage is prone to occur at the end member of each core segment proximate to the rotation axis, thereby reducing the power density of the motor.

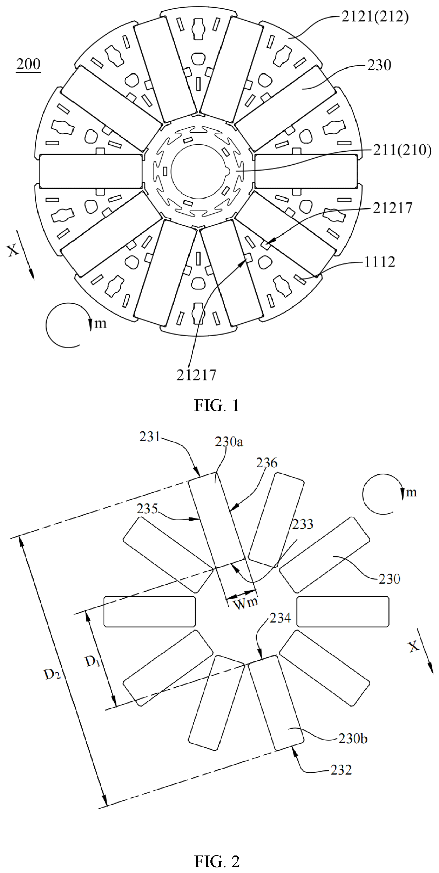

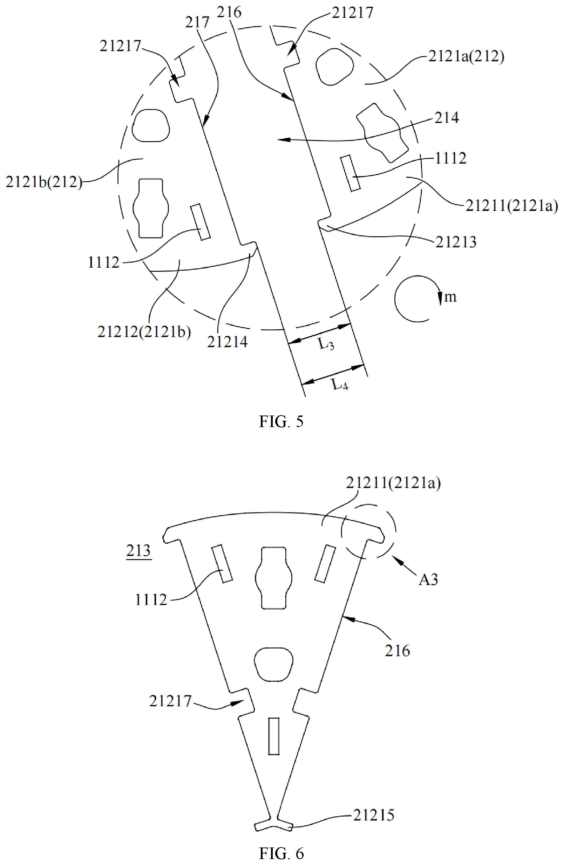

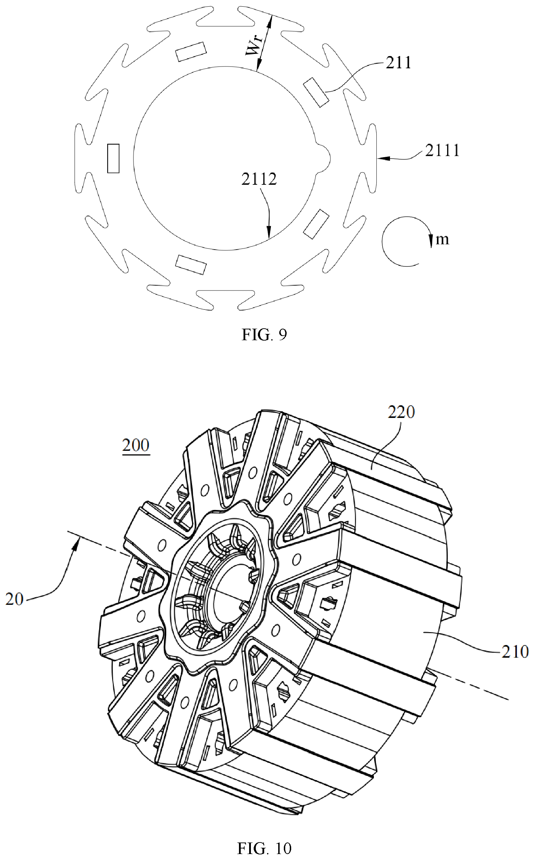

In view of the above, as shown in FIGS. 1-16, some embodiments of the present disclosure provide a rotor assembly 200 configured to rotate about a rotation axis 20. The rotor assembly 200 includes a rotor core 210 and N permanent magnets 230, where N ≥ 4. For example, N may be 4, 6, 8, 10, or 12. In the embodiment shown in FIGS. 1-5, N = 10.

As shown in FIGS. 1-3, 6, and 8, the rotor core 210 has an inner core 211 and an outer core 212 disconnected from the inner core 211. The term "disconnected" is interpreted to be that the inner core 211 and the outer core 212 are not in direct contact, but they may be indirectly connected, e.g., via a first injection-molded member 220 as in some embodiments. The outer core 212 includes a plurality of core segments 2121 that are spaced apart from each other (i.e., not in direct contact). In some embodiments, the core segments 2121 are indirectly in contact via the permanent magnets 230 and/or the first injection-molded member 220. The core segments 2121 are distributed around the inner core 211 along a circumferential direction m of the rotation axis 20, specifically arranged in a circular array centered on the rotation axis 20. Adjacent core segments 2121 are equally spaced along the circumferential direction m. Each core segment 2121 includes a plurality of core laminations 213 stacked along a first direction y parallel to the rotation axis 20. The thinnest core lamination among the core laminations 213 has a thickness Ts along the first direction y. That is, when each iron core lamination 213 has an equal thickness along the first direction y, Ts is the thickness of any iron core lamination 213 along the first direction y; and when at least two of the iron core laminations 213 have different thicknesses along the first direction y, Ts is the smallest thickness among the respective thicknesses of all the core laminations 213.

A mounting slot 214 is formed between every two adjacent core segments 2121. Each permanent magnet 230 is disposed in a corresponding mounting slot 214. It should be noted that each of the mounting slots 214 holds one permanent magnet 230. In some embodiments, the permanent magnet 230 may be a single integrated piece. In other embodiments, the permanent magnet 230 may include a plurality of permanent magnet subunits stacked along the first direction y. Among the permanent magnets 230, a first permanent magnet 230a and a second permanent magnet 230b are located on opposite sides of the rotation axis 20 along a second direction x perpendicular to the rotation axis 20. The terms "first permanent magnet 230a" and "second permanent magnet 230b" refer to any two permanent magnets 230 located diametrically opposite each other along the radial direction of the rotor assembly 200. Thus, in the embodiment shown in FIG. 2, the rotor assembly includes five pairs of permanent magnets 230, the two permanent magnets 230 in each pair may be referred to as a first permanent magnet 230a and a second permanent magnet 230b. In other embodiments, for example, when the rotor assembly 200 includes twelve permanent magnets 230, there are six pairs of "first permanent magnets 230a" and "second permanent magnets 230b". For ease of description, one such pair is used as an example. The first permanent magnet 230a has a first wall surface 233 facing the second permanent magnet 230b. The second permanent magnet 230b has a second wall surface 234 facing the first permanent magnet 230a. A maximum distance D₁ between the first wall surface 233 and the second wall surface 234 and a maximum width Wm of the first wall surface 233 along the circumferential direction m satisfy the following relationship: $Wm = \frac{π \times {D}_{1} - K \times N \times Ts}{N} ,$ Specifically, the above formula is equivalent to: $\frac{π \times {D}_{1}}{N} = Wm + K \times Ts ,$ where, let $\frac{π \times {D}_{1}}{N} = {T}_{1} ,$ thus $Wm = {T}_{1} - K \times Ts ,$
where 1 ≤ K ≤ 5. For example, K may be 1, 2, 3, 4, or 5. T₁ substantially equals the theoretical maximum dimension of the first wall surface 233. With 1 ≤ K ≤ 5, the maximum width Wm of the first wall surface 233 along the circumferential direction m is less than the theoretical maximum dimension minus one to five times the minimum thickness Ts of the thinnest core lamination 213. This configuration effectively limits magnetic flux leakage at support positions near the rotation axis 20 at both ends of any outer core 212, thereby improving motor power density and reducing motor cost. Constraining the width of the permanent magnets 230 at an end near the rotation axis 20 improves low-speed light-load performance of the motor 10 and enhances demagnetization resistance of the permanent magnets 230, enabling efficient and reliable motor operation.

It should be noted that since the first permanent magnet 230a may be any one of the permanent magnets 230, in some embodiments, the maximum width along the circumferential direction m between the sides of each permanent magnet 230 at a side wall facing the rotation axis 20 may be Wm. The first permanent magnet 230a has a sixth wall surface 235 and a seventh wall surface 236 opposite each other along the circumferential direction m. If the sixth and seventh wall surfaces 235, 236 are planar and parallel, then the width between them equals the maximum width Wm of the first wall surface 233 along the circumferential direction m. If the sixth and seventh wall surfaces 235, 236 are not parallel or are non-planar, a maximum width between the end of the sixth wall surface 235 near the rotation axis 20 and the end of the seventh wall surface 236 near the rotation axis 20 equals the maximum width Wm of the first wall surface 233 along the circumferential direction m. If chamfers are respectively present between the first wall surface 233 and the sixth and seventh wall surfaces 235, 236, a maximum width, between an edge of the chamfer between the first wall surface 233 and the sixth wall surface 235 that is adjacent to the sixth wall surface 235 and an edge of the chamfer between the first wall surface 233 and the seventh wall surface 236 that is adjacent to the seventh wall surface 236, is defined as Wm.

As shown in FIGS. 2-5 and 9, in some embodiments, the inner core 211 is annular and arranged around the rotation axis 20. The inner core 211 has a first inner peripheral wall 2111 near the rotation axis 20 and a first outer peripheral wall 2112 away from the rotation axis 20. Along the first direction y, a maximum width Wr between the first inner peripheral wall 2111 and the first outer peripheral wall 2112 satisfies Wr ≥ 2 × Ts. For example, Wr may be 2Ts, 2.2Ts, 2.4Ts, 2.6Ts, 2.8Ts, or 3Ts. In this case, Wr equals the maximum ring width of the inner core 211 along the second direction x. A larger Wr reduces the gap between the inner core 211 and the outer core 212, making injection molding difficult and reducing connection stability. A smaller Wr reduces support for a shaft extending through the inner core 211. When Wr ≥ 2 × Ts, the gap between the inner core 211 and the outer core 212 is increased, providing more space for injection molding and improving connection stability of the inner core 211 and the outer core 212, while also providing better support for the shaft.

Referring to FIGS. 2-5 and 9, in some embodiments, the inner core 211 is annular and arranged around the rotation axis 20. The inner core 211 has a first inner peripheral wall 2111 near the rotation axis 20 and a first outer peripheral wall 2112 away from the rotation axis 20. Along the first direction y, a maximum width Wr between the first inner peripheral wall 2111 and the first outer peripheral wall 2112 satisfies Wr ≥ 2.5 mm. For example, Wr may be 2.5 mm, 2.7 mm, 3 mm, 3.2 mm, 3.5 mm, or 3.7 mm, etc. In this scheme, on one hand, the gap between the inner core 211 and the outer core 212 is increased, thereby increasing the injection molding space and improving the connection stability between the inner core 211 and the outer core 212; on the other hand, the support stability for the shaft can also be improved. In further embodiments, Wr may also satisfy Wr ≥ 2 × Ts.

As shown in FIGS. 2-5 and 9, in some embodiments, along the radial direction of the rotor assembly 200, a minimum width Wa between each core segment 2121 and the inner core 211 satisfies Wa ≥ 2 × Ts. For example, Wa may be 2Ts, 2.2Ts, 2.4Ts, 2.6Ts, 2.8Ts, or 3Ts, etc. In this configuration, on one hand, the gap between the inner core 211 and the outer core 212 may be increased, thereby increasing the injection molding space and improving the connection stability between the inner core 211 and the outer core 212; on the other hand, the support stability for the shaft may also be improved.

As shown in FIGS. 2-5 and 9, in some embodiments, along the radial direction of the rotor assembly 200, a minimum width Wa between each core segment 2121 and the inner core 211 satisfies Wa ≥ 2.5 mm. For example, Wa may be 2.5 mm, 2.7 mm, 3 mm, 3.2 mm, 3.5 mm, or 3.7 mm, etc. In this configuration, on one hand, the gap between the inner core 211 and the outer core 212 may be increased, thereby increasing the injection molding space and improving the connection stability between the inner core 211 and the outer core 212; on the other hand, the support stability for the shaft may also be improved. In further embodiments, Wa may also satisfy Wa ≥ 2 × Ts.

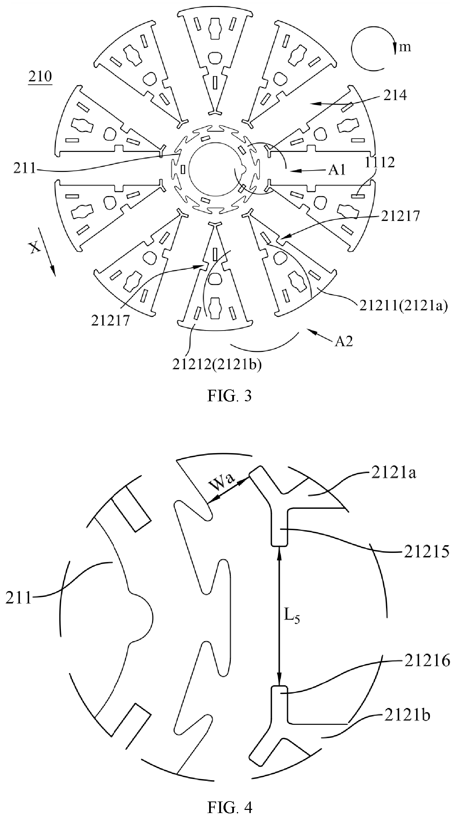

As shown in FIGS. 3-7, to stably position the permanent magnet 230, the core segment 2121 has a third wall surface 215 on one side of the core segment in the circumferential direction m. The third wall surface 215 is provided with a limit protrusion 218. The limit protrusion 218 is configured to abut against a side wall of the permanent magnet 230 facing away from or toward the rotation axis 20. In some embodiments, the limit protrusion 218 may be located on a side of the third wall surface 215 away from the rotation axis 20 (i.e., the first limit protrusion 21213 or third limit protrusion 21214 described below) to abut against the side wall of the permanent magnet 230 facing away from the rotation axis 20, thereby limiting outward radial movement. In other embodiments, the limit protrusion 218 may be located on a side of the third wall surface 215 near the rotation axis 20 (i.e., the second limit protrusion 21215 or fourth limit protrusion 21216 described below) to abut against a side wall of the permanent magnet 230 facing the rotation axis 20, thereby limiting inward radial movement. In yet other embodiments, the side of the third wall surface 215 near the rotation axis 20 and the side away from the rotation axis 20 may be respectively provided with limit protrusions 218, and the two limit protrusions 218 correspondingly abut against the two side walls of the permanent magnet 230 in the radial direction of the rotor assembly 200.

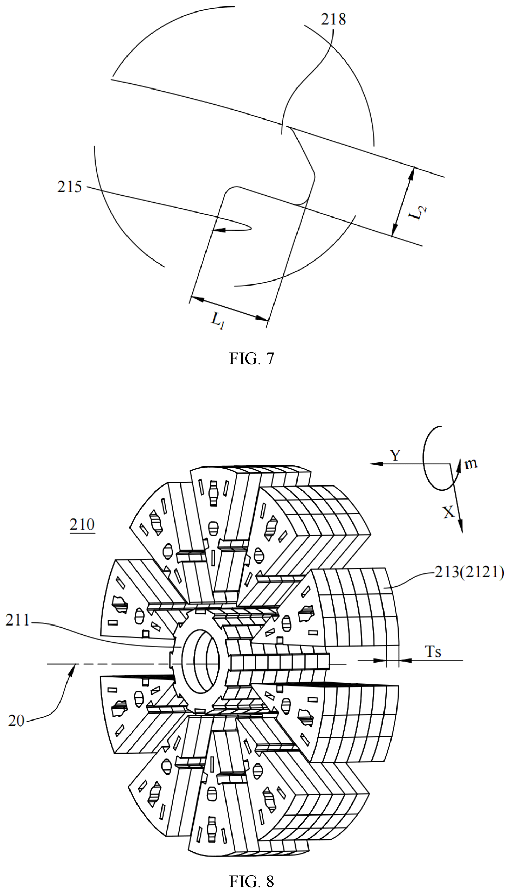

If the limit protrusion 218 extends too far from the third wall surface 215, the magnetic flux leakage of the rotor assembly 200 increases; if it extends too little, the limiting effect of the limit protrusion 218 on the permanent magnet 230 is poor. Thus, as shown in FIG. 7, in some embodiments, a maximum length L₁ from an end of the limit protrusion 218 away from the third wall surface 215 to the third wall surface 215 satisfies L₁ ≥ Ts, e.g., Ts, 1.2Ts, 1.3Ts, 1.4Ts, 1.5Ts, or 1.6Ts. In this scheme, the limit protrusion 218 can provide good limiting for the permanent magnets 230 and keep a low magnetic flux leakage of the rotor assembly 200.

If the radial length of the limit protrusion 218 is too long, the magnetic flux leakage of the rotor assembly 200 increases; if too small, strength and rigidity of the limit protrusion 218 are poor. Thus, as shown in FIG. 7, in some embodiments, a minimum length L₂ between a side edge of the limit protrusion 218 facing the rotation axis 20 and a side edge of the limit protrusion 218 facing away from the rotation axis 20 satisfies L₂ ≥ Ts, e.g., Ts, 1.2Ts, 1.3Ts, 1.4Ts, 1.5Ts, or 1.6Ts. This provides adequate strength and rigidity with low flux leakage. In this scheme, the limit protrusion 218 provides adequate strength and rigidity with a low magnetic flux leakage of the rotor assembly 200.

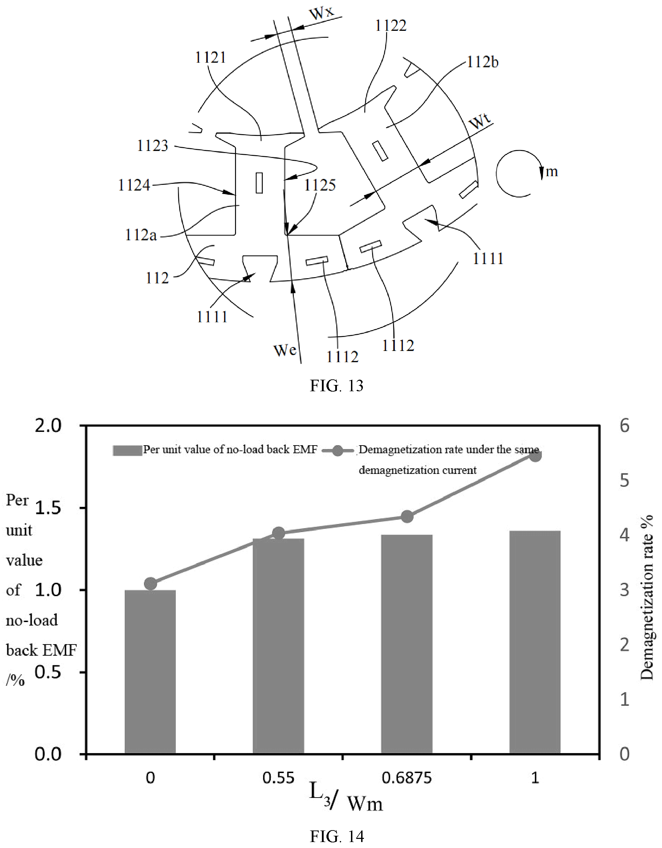

As shown in FIGS. 2-5, in some embodiments, a first core segment 2121a and a second core segment 2121b among the core segments 2121 form the mounting slot 214 therebetween. In other words, the first core segment 2121a and the second core segment 2121b are adjacent to each other along the circumferential direction m and spaced apart. It should be noted that the different designations "first core segment 2121a" and "second core segment 2121b" are only for distinction, and any two core segments 2121 that are adjacent to each other along the circumferential direction m among the core segments 2121 may be referred to as the first core segment 2121a and the second core segment 2121b. The first core segment 2121a has a first end member 21211 away from the rotation axis 20, and the second core segment 2121b has a second end member 21212 away from the rotation axis 20. A minimum length L₃ between the first end member 21211 and the second end member 21212 satisfies L₃ ≤ 0.6 × Wm, e.g., 0.2Wm, 0.3Wm, 0.4Wm, 0.5Wm, or 0.6Wm. Referring to FIG. 14, as L₃/Wm increases from 0 to 1, the demagnetization rate at the same demagnetization current gradually increases, reducing motor efficiency. Therefore, L₃/Wm should not be too large. It has been verified that when L₃ ≤ 0.6 × Wm, the demagnetization rate of the motor 10 is reduced and motor efficiency is improved.

In further embodiments, the minimum length L₃ satisfies 0.4 × Wm ≤ L₃ ≤ 0.6 × Wm, e.g., 0.4Wm, 0.45Wm, 0.5Wm, 0.55Wm, or 0.6Wm. As shown in FIG. 14, when L₃/Wm = 0, a per unit value of a no-load back (electromotive force) EMF is set to 1. As L₃/Wm increases from 0 to 1, the per unit value of the no-load back EMF gradually increases, however, the demagnetization rate of the motor 10 under the same demagnetization current also increases. Thus, L₃/Wm should be within a suitable range: too high leads to high demagnetization rate of the motor 10, and too low leads to excessive magnetic flux leakage and reduced efficiency of the motor 10. It has been verified that when 0.4 × Wm ≤ L₃ ≤ 0.6 × Wm, the motor 10 has a relatively low demagnetization rate and a relatively high per unit value of the no-load back EMF, so the efficiency of the motor 10 is relatively high.

As shown in FIGS. 2-5, in some embodiments, two of the core segments 2121 are a first core segment 2121a and a second core segment 2121b. The mounting slot 214 is formed between the first core segment 2121a and the second core segment 2121b. The first core segment 2121a has a fourth wall surface 216 facing the second core segment 2121b. The fourth wall surface 216 is provided with at least two limit protrusions 218. For ease of distinction, the two limit protrusions 218 are respectively named a first limit protrusion 21213 and a second limit protrusion 21215. The second core segment 2121b has a fifth wall surface 217 facing the first core segment 2121a. The fifth wall surface 217 is provided with at least two limit protrusions 218. For ease of distinction, the two limit protrusions 218 are respectively named a third limit protrusion 21214 and a fourth limit protrusion 21216. The first limit protrusion 21213 and the third limit protrusion 21214 are adapted to abut against the side wall of the permanent magnet 230 facing away from the rotation axis 20. The second limit protrusion 21215 and the fourth limit protrusion 21216 are adapted to abut against the side wall of the permanent magnet 230 facing the rotation axis 20. That is, the first limit protrusion 21213, the second limit protrusion 21215, the third limit protrusion 21214, and the fourth limit protrusion 21216 jointly limit and position the permanent magnet 230. In an embodiment, a minimum length between the first limit protrusion 21213 and the third limit protrusion 21214 is L₄, and a minimum length between the second limit protrusion 21215 and the fourth limit protrusion 21216 is L₅, where L₅ ≥ L₄. This configuration reduces magnetic flux leakage at an end of the outer core 212 near the rotation axis 20, improving motor efficiency, while also improving retention of the permanent magnets 230, preventing them from moving radially outward of the rotor core 210 due to centrifugal force during rotation of the rotor assembly 200.

As shown in FIGS. 2-5, in some embodiments, the first limit protrusion 21213 is located at an end of the fourth wall surface 216 away from the rotation axis 20, and the second limit protrusion 21215 is located at an end of the fourth wall surface 216 near the rotation axis 20. The third limit protrusion 21214 is located at an end of the fifth wall surface 217 away from the rotation axis 20, and the fourth limit protrusion 21216 is located at an end of the fifth wall surface 217 near the rotation axis 20. In this configuration, the minimum length L₄ between the first and third limit protrusions equals the minimum length L₃ between the first end member 21211 and the second end member 21212. Thus, when L₃ is small, the magnetic flux leakage is further reduced compared to configurations without limit protrusions 218.

In some embodiments, the permanent magnet 230 protrudes from one or both ends of the mounting slot 214 along the first direction y, which improves utilization of magnetic material.

As shown in FIGS. 2-6, in some embodiments, the core segment 2121 has a third wall surface 215 in contact with the permanent magnet 230. The third wall surface 215 is reserved with a first trench for injection molding 21217 extending through the core segment 2121 along the first direction y. In some embodiments, the rotor assembly 200 further includes a first injection-molded member 220 that connects the outer core 212 and the inner core 211 by filling the gap between them. The first injection-molded member 220 may also fill the first trench for injection molding 21217, thereby more securely connecting the core laminations 213.

As shown in FIGS. 2-6, in some embodiments, each core lamination 213 includes a limit member 1112. The limit member 1112 is a recess formed on a surface of the core lamination 213 along the first direction y or a protrusion formed on another surface, the first direction y is parallel to the rotational axis 20. When a plurality of core laminations 213 are stacked along the first direction y, the protrusion of one core lamination is inserted into the recess of an adjacent core lamination, while its recess receives another protrusion of another adjacent core lamination. This stabilizes the relative circumferential positions of the core laminations 213, preventing relative circumferential movement. In other embodiments, the stator core 110 may include laminations with such limit members, which will not be detailed here.

Under heavy load and light load, the stator winding AC loss and the core loss of an electric motor differ, leading to different machine efficiencies under the two load conditions. In related technologies, a motor is designed either to emphasize heavy-load efficiency (actual load > 80% of a rated load) at the expense of light-load efficiency (actual load < 30% of a rated load), or vice versa. When a motor operates under both heavy-load and light-load conditions, its comprehensive efficiency is suboptimal regardless of which condition is prioritized during design. That is, when the motor design focuses on the heavy-load condition, because it actually operates under light-load conditions with low efficiency, the comprehensive efficiency of the motor is poor; when the motor design focuses on the light-load condition, because it actually operates under heavy-load conditions with low efficiency, the comprehensive efficiency of the motor is poor.

To achieve a better comprehensive efficiency under both heavy-load and light-load conditions, the stator winding AC loss and the core loss need to be balanced under different working conditions. However, the specific means for achieving such a balance are not known in the related art. Through analysis and demonstration, the applicant has discovered that a ratio of the outer diameter of the permanent magnets of the motor to the outer diameter of the stator core correlates with the comprehensive efficiency of the motor. That is, the present disclosure first provides a concept for balancing the stator winding AC loss and the core loss of the motor, and under the guidance of this concept, provides specific means to achieve the balance of stator winding AC loss and core loss through experimental verification, thereby achieving the technical effect of better overall efficiency of the motor when operating under different working conditions.

In accordance with a second aspect of the present disclosure, an embodiment provides a motor 10 including the rotor assembly 200 of any of the above embodiments and a stator assembly 100 surrounding the rotor assembly 200.

As shown in FIGS. 1-2 and 11-13, in some embodiments, the first permanent magnet 230a has an eighth wall surface 231 facing away from the second permanent magnet 230b, and the second permanent magnet 230b has a ninth wall surface 232 facing away from the first permanent magnet 230a. A minimum distance between the eighth wall surface 231 and the ninth wall surface 232 is D₂. In particular, if the eighth and ninth wall surfaces 231, 232 are planar and parallel, then D₂ is the distance between them at any point. In other embodiments, the eighth and ninth wall surfaces 231, 232 are planar and have a small included angle (the existence of such an included angle may be due to design requirements, or may be caused by manufacturing tolerances or assembly errors), or the eighth and ninth wall surfaces 231, 232 are curved surfaces, in either case D₂ is the minimum radial distance between them along the radial direction of the rotor assembly 200.

The stator assembly 100 surrounds the rotor assembly 200. The stator assembly 100 includes a stator core 110. Specifically, the stator core 110 includes a yoke 111 and a plurality of teeth 112. The yoke 111 is annular and surrounds the rotor assembly 200. The teeth 112 are disposed between the yoke 111 and the rotor core 210 and connect to the yoke 111. The teeth 112 are distributed around the rotor assembly 200, each having one end connected to an inner peripheral wall of the yoke 111 and the other end spaced apart from the rotor assembly 200. The teeth 112 are arranged in a circular array centered on the rotation axis 20, with equal circumferential spacing between adjacent teeth 112. The stator assembly 100 may further include coil windings wound around each tooth 112.

A maximum outer diameter of the stator core 110 is D₃. In some embodiments, D₃ is the maximum outer diameter of an outer peripheral wall of the yoke 111. In other embodiments where the yoke 111 includes additional structures such as outer teeth, D₃ is the maximum outer diameter of the outermost structure. For illustration, the maximum outer diameter of the yoke 111 is used as D₃ in this embodiment. If the outer peripheral wall of the stator core 110 is a regular circle, D₃ is its diameter. If it is irregular, D₃ is the maximum dimension of the outer peripheral wall of the stator core 110 along a direction perpendicular to the rotation axis 20. D₃ can be measured by using a vernier caliper to contact opposite sides of the stator core 110 along a direction perpendicular to the rotation axis 20 and rotating the stator assembly 100 about the rotation axis 20; the maximum reading is D₃.

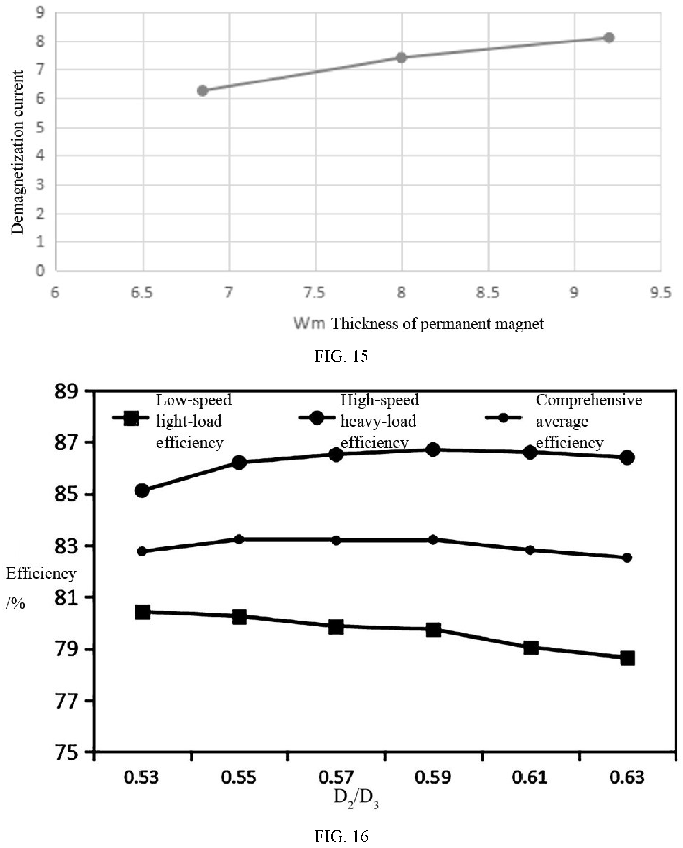

It has been verified that the ratio D₂/D₃ correlates with the distribution of stator winding AC loss and core loss in the motor. When D₂/D₃ is small, the core loss may be relatively small; when D₂/D₃ is large, AC loss may be relatively small. Only within a certain range of D₂/D₃ is the distribution of AC loss and core loss optimal, resulting in the highest motor efficiency. When the distribution is optimal, the motor 10 operates efficiently under both heavy-load and light-load conditions. As shown in FIGS. 1-2, 11-13, and 16, through experimental analysis, when 0.5 ≤ D₂/D₃ ≤ 0.6 (e.g., 0.5, 0.52, 0.54, 0.56, 0.58, or 0.6), the magnetic field distribution in the permanent magnet motor 10 is optimized, minimizing both AC loss and core loss under various operating conditions. Thus, the motor 10 achieves better comprehensive efficiency when operating under both heavy-load and light-load conditions. As shown in FIG. 16, when D₂/D₃ is between 0.53 and 0.55, heavy-load efficiency tends to increase while light-load efficiency tends to decrease. When D₂/D₃ is between 0.61 and 0.63, both heavy-load and light-load efficiencies show a slight decrease. The optimal comprehensive efficiency occurs in the middle range between 0.53 and 0.63. After verification, when 0.5 ≤ D₂/D₃ ≤ 0.6, the comprehensive efficiency of the motor 10 is favorable.

To further improve comprehensive efficiency, in some embodiments, 0.53 ≤ D₂/D₃ ≤ 0.57, e.g., 0.53, 0.54, 0.55, 0.56, or 0.57. In this range, the comprehensive efficiency of the motor 10 is even better.

As shown in FIGS. 1-2, 11-13, and 16, in some embodiments, 40 mm ≤ D₂ ≤ 100 mm, e.g., 40 mm, 50 mm, 60 mm, 70 mm, 80 mm, 90 mm, or 100 mm. This range enhances the correlation between the ratio D₂/D₃ and the comprehensive efficiency of the motor 10, and while further improving the comprehensive efficiency of the motor 10, the predictions of efficiency improvement are more accurate. Preferably, 60 mm ≤ D₂ ≤ 80 mm, e.g., 60 mm, 65 mm, 70 mm, 75 mm, or 80 mm. When 60 mm ≤ D₂ ≤ 80 mm, the correlation between the ratio D₂/D₃ and the comprehensive efficiency of the motor 10 is even stronger, and while further improving the comprehensive efficiency of the motor 10, the predictions of efficiency improvement are even more accurate.

To distribute core loss evenly between the teeth 112 and the yoke 111 of the motor 10, further optimization on the motor 10 is provided. As shown in FIGS. 1-2, 11-13, and 16, in some embodiments, the stator core 110 has X teeth 112, where X ≥ 6, and X may be greater than the number of permanent magnets 230. Each tooth 112 has a tenth wall surface 1123 and an eleventh wall surface 1124 opposite each other along the circumferential direction m of the rotational axis 20. A minimum width Wt between the tenth wall surface 1123 and the eleventh wall surface 1124 satisfies: $\frac{π \times \left({D}_{2}+{D}_{3}\right)}{8 \times X} \leq Wt \leq \frac{π \times \left({D}_{2}+{D}_{3}\right)}{3 \times X} ,$ Specifically, the above formula is equivalent to: $\frac{\left({D}_{2}+{D}_{3}\right)}{2} \times π \times \frac{1}{X} \times \frac{1}{4} \leq Wt \leq \frac{\left({D}_{2}+{D}_{3}\right)}{2} \times π \times \frac{1}{X} \times \frac{2}{3} ,$ where, let $\frac{\left({D}_{2}+{D}_{3}\right)}{2} \times π \times \frac{1}{X} = {T}_{2} ,$ thus $\frac{{T}_{2}}{4} \leq Wt \leq \frac{2 {T}_{2}}{3} ,$ where T₂ substantially equals the theoretical maximum space available in a circumferential direction m of the stator assembly 100 at a radially middle portion of a single tooth 112. Thus, Wt is between T₂/4 and 2T₂/3 of the theoretical maximum space at the middle position of the tooth 112. Specifically, Wt may be T₂/4, T₂/3, 5T₂/12, T₂/2, 7T₂/12, or 2T₂/3. This configuration enables the core loss of the stator assembly 100 to be evenly distributed between the teeth 112 and the yoke 111 of the motor 10.

It should be noted that, in the present embodiment, the tenth wall surface 1123 and the eleventh wall surface 1124 are planar and are parallel to each other. In this case, Wt is a width between any two directly opposite points on the tenth wall surface 1123 and the eleventh wall surface 1124. In other embodiments, the tenth wall surface 1123 and the eleventh wall surface 1124 are planar and have an included angle therebetween (the angle may be due to design requirements or may be manufacturing tolerances). In this case, Wt is the minimum width between the tenth wall surface 1123 and the eleventh wall surface 1124. Wt may be measured by using a vernier caliper to abut two measuring jaws thereof respectively against the tenth wall surface 1123 and the eleventh wall surface 1124 and translating the vernier caliper along the radial direction of the stator assembly 100; the minimum reading is the minimum width Wt. In another embodiment, the tenth wall surface 1123 and the eleventh wall surface 1124 may also be of other irregular shapes. The definition of Wt in this embodiment is the same as that in the foregoing embodiments, and a detailed description thereof is omitted here.

As shown in FIGS. 1-2, 11-13, and 16, in some embodiments, the stator core 110 has X teeth 112, where X ≥ 6, and X may be greater than the number of permanent magnets 230. The plurality of teeth 112 include a first tooth 112a and a second tooth 112b arranged adjacent to each other along the circumferential direction m of the rotational axis 20. The first tooth 112a and the second tooth 112b are spaced apart from each other, and the space between them (i.e., the slot) accommodates the coil winding. It should be noted that the first tooth 112a and the second tooth 112b are any two teeth 112 adjacent to each other along the circumferential direction m among the teeth 112, and the difference in naming therebetween is only for distinction. The first tooth 112a has a third end member 1121 (the shoe of the first tooth 112a) away from the yoke 111. The second tooth 112b has a fourth end member 1122 (the shoe of the second tooth 112b) away from the yoke 111. The third end member 1121 and the fourth end member 1122 are spaced apart along the circumferential direction m, such that a minimum width Wx between them satisfies: $\frac{π \times {D}_{2}}{10 \times X} \leq Wx \leq \frac{π \times {D}_{2}}{5 \times X} ,$ Specifically, the above formula is equivalent to: ${D}_{2} \times π \times \frac{1}{X} \times \frac{1}{10} \leq Wx \leq {D}_{2} \times π \times \frac{1}{X} \times \frac{1}{5} ,$ where, let ${D}_{2} \times π \times \frac{1}{X} = {T}_{3} ,$ thus $\frac{{T}_{3}}{10} \leq Wx \leq \frac{{T}_{3}}{5} ,$
where T₃ substantially equals the theoretical maximum circumferential space between the side walls of a single permanent magnet 230 at a side facing away from the rotation axis 20. Wx may be, for example, T₃/10, 3T₃/25, 7T₃/50, 4T₃/25, or T₃/5. The width between the shoes of the stator assembly 110 affects core loss in the shoes and the sinusoidal nature of the air gap magnetic flux density, impacting motor efficiency, cogging torque, and torque ripple. Cogging torque is the torque generated by the interaction between the permanent magnets 230 and the armature teeth when the motor windings are not energized, caused by fluctuations in the tangential component of the interaction force. When Wx is between T₃/10 and T₃/5, the distribution of air gap magnetic flux density is altered, reducing cogging torque of the motor 10.

As shown in FIGS. 1-2, 11-13, and 16, in some embodiments, each tooth 112 has the tenth wall surface 1123 and the eleventh wall surface 1124 on the opposite sides in the circumferential direction m of the rotational 20. The tenth wall surface 1123 meets the second inner peripheral wall of the yoke 111 at a boundary line 1125. If there is a chamfer (rounded or straight) at the junction, the boundary line 1125 is defined as the edge of the chamfer away from the tenth wall surface 1123. In this embodiment, the outer peripheral wall of the yoke 111 defines the maximum outer diameter of the stator core 110 (in other embodiments, outer teeth may be present, and the maximum outer diameter of those outer teeth defines D₃). A minimum width We between the boundary line 1125 and the outer peripheral wall of the yoke 111 satisfies: $\frac{{D}_{3} - {D}_{2}}{12} \leq We \leq \frac{{D}_{3} - {D}_{2}}{6} ,$

Specifically, the above formula is equivalent to: $\frac{{D}_{3} - {D}_{2}}{2} \times \frac{1}{6} \leq We \leq \frac{{D}_{3} - {D}_{2}}{2} \times \frac{1}{3} ,$ where, let $\frac{{D}_{3} - {D}_{2}}{2} = {T}_{4} ,$ thus $\frac{{T}_{4}}{6} \leq We \leq \frac{{T}_{4}}{3} ,$
where T₄ substantially equals the maximum radial width of the stator core 110. We may be, for example, T₄/6, 2T₄/9, 5T₄/18, or T₄/3. When We is between T₄/6 and T₄/3, the distribution of AC loss and core loss in the motor 10 is optimized, improving the comprehensive efficiency of the electric motor 10.

As shown in FIG. 16, in an embodiment, with D₂ = 74.8 mm (±0.2 mm), D₃ = 136-142 mm, Wt = 9.95 mm (±0.2 mm), We = 7.3 mm (±0.2 mm), Wx = 3-4.2 mm, and K = 4.4 mm (±0.2 mm), the motor achieves a relatively favorable efficiency-to-cost ratio.

In another embodiment, with an inner diameter of the inner core of 12.7 mm (±0.2 mm), D₃ = 136-142 mm, Wr = 4.3 mm (±0.2 mm), Wa = 2.3 mm (±0.2 mm), Wm = 8 mm (±0.2 mm), radial length of permanent magnet = 24 mm (±0.2 mm), L₃ = 4.4 mm (±0.2 mm), L₅ = 5.2 mm (±0.2 mm), radial dimension of the second limit protrusion = 0.3 mm (±0.2 mm), and radial dimension of the first limit protrusion = 0.92 mm (±0.2 mm), the motor achieves the highest efficiency-to-cost ratio while also meeting requirements for demagnetization resistance and shaft voltage reduction.

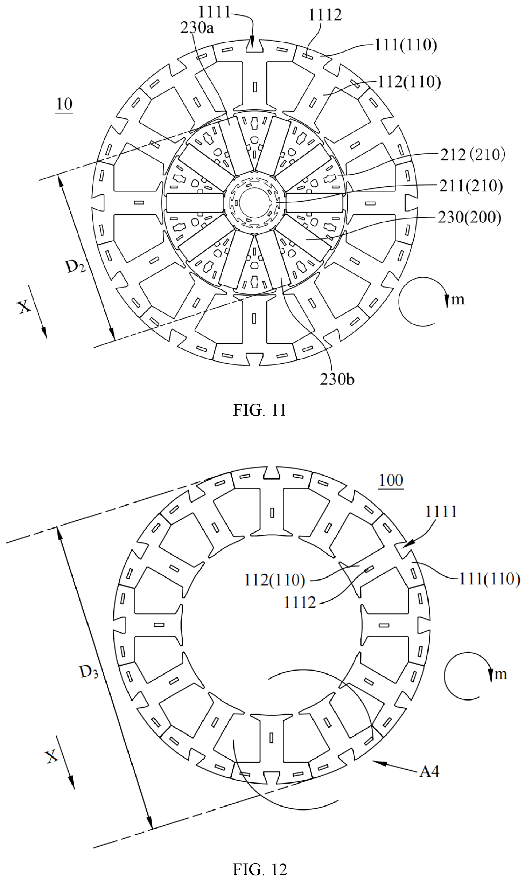

As shown in FIGS. 11-13, in some embodiments, the stator core 110 has a second outer peripheral wall provided with a second trench for injection molding 1111. In some embodiments, the stator assembly 100 further includes a second injection-molded member that encapsulates the stator core 110 and the coil winding. Specifically, the second injection-molded member further secures the laminations of the stator core 110 by filling the second trench for injection molding 1111.

In accordance with a third aspect of the present disclosure, an embodiment provides an air supply assembly. The air supply assembly includes the motor 10 according to any of the above embodiments. The air supply assembly is used to drive air toward a target direction and can be applied in appliances such as electric fans, air conditioners, hair dryers, range hoods, and fresh air devices.

In accordance with a fourth aspect of the present disclosure, an embodiment provides an air treatment device. The air treatment device includes the air supply assembly described above. The air treatment device may be, for example, an electric fan, an air conditioner, a hair dryer, a range hood, or a fresh air device.

It should be noted that any directional indications (e.g., upper, lower, left, right, front, back) in the embodiments are used only to explain relative positions, movements, etc., under a specific orientation. If the orientation changes, the directional indications change accordingly.

Terms such as "first," "second," etc., are used for descriptive purposes only and do not indicate or imply relative importance or implicitly indicate the number of technical features. Thus, features defined with "first," "second," etc., may explicitly or implicitly include at least one such feature. The term "and/or" includes any and all combinations of one or more of the associated listed items. Taking "A and/or B" as an example, it includes the solution of A alone, the solution of B alone, or the solution of both A and B. Technical features of different embodiments may be combined if feasible; if a combination leads to contradiction or is impractical, it is not intended to be within the scope of the present disclosure.

The above descriptions are only preferred embodiments of the present disclosure and are not intended to limit the scope of the present disclosure. Any equivalent structural changes made using the specification and drawings of the present disclosure, or any direct or indirect applications in other related technical fields, falls within the scope of patent protection of the present disclosure.

## Claims

1. A rotor assembly, configured to rotate about a rotation axis, comprising:
a rotor core comprising:
an inner core, and
an outer core disconnected from the inner core and comprising a plurality of core segments spaced apart from each other around the inner core along a circumferential direction of the rotation axis of the rotor assembly, a plurality of mounting slots each being formed between every two adjacent ones of the core segments, and each of the core segments comprising a plurality of core laminations stacked along a first direction parallel to the rotation axis; and
N permanent magnets with N ≥ 4, each disposed in a corresponding one of the mounting slots, any two of the permanent magnets located on opposite sides of the rotation axis along a second direction perpendicular to the rotation axis being a first permanent magnet and a second permanent magnet, the first permanent magnet having a first wall surface facing the second permanent magnet, and the second permanent magnet having a second wall surface facing the first permanent magnet,
wherein a maximum width Wm of the first wall surface along the circumferential direction satisfies: $Wm = \frac{π \times {D}_{1} - K \times N \times Ts}{N} ,$
where D₁ denotes a maximum distance between the first wall surface and the second wall surface, Ts denotes a thickness, along the first direction, of a thinnest one among the plurality of core laminations, and 1 ≤ K ≤ 5.

2. The rotor assembly of claim 1, wherein:
the inner core is annular and surrounds the rotation axis, and has a first inner peripheral wall near the rotation axis and a first outer peripheral wall away from the rotation axis; and
a maximum width Wr between the first inner peripheral wall and the first outer peripheral wall along the second direction satisfies Wr ≥ 2 × Ts, or Wr ≥ 2.5 mm.

3. The rotor assembly of claim 1 or 2, wherein a minimum width Wa between each of the core segments and the inner core along a radial direction of the rotor assembly satisfies Wa ≥ 2 × Ts, or Wa ≥ 2.5 mm.

4. The rotor assembly of any of claims 1 to 3, wherein:
each of the core segments has a third wall surface on one side of the core segment in the circumferential direction, and the third wall surface is provided with a limit protrusion configured to abut against a side wall of the permanent magnet facing away from or toward the rotation axis; and
a maximum length L₁ from an end of the limit protrusion away from the third wall surface to the third wall surface satisfies L₁ ≥ Ts, or a minimum length L₂ between a side edge of the limit protrusion facing the rotation axis and a side edge of the limit protrusion facing away from the rotation axis satisfies L₂ ≥ Ts.

5. The rotor assembly of any of claims 1 to 4, wherein:
the plurality of core segments comprises a first core segment and a second core segment, and the mounting slot is defined between the first core segment and the second core segment;
the first core segment has a first end member away from the rotation axis, and the second core segment has a second end member away from the rotation axis; and
a minimum length L₃ between the first end member and the second end member satisfies L₃ ≤ 0.6 × Wm, or 0.4 × Wm ≤ L₃ ≤ 0.6 × Wm.

6. The rotor assembly of any of claims 1 to 5, wherein:
the plurality of core segments comprises a first core segment and a second core segment, and the mounting slot is defined between the first core segment and the second core segment;
the first core segment has a fourth wall surface facing the second core segment, the fourth wall surface is provided with a first limit protrusion and a second limit protrusion, the second core segment has a fifth wall surface facing the first core segment, the fifth wall surface is provided with a third limit protrusion and a fourth limit protrusion; and
the first and third limit protrusions are configured to abut against a side wall of the permanent magnet facing away from the rotation axis, and the second and fourth limit protrusions are configured to abut against a side wall of the permanent magnet facing the rotation axis; and
a minimum length between the first and third limit protrusions is L₄, and a minimum length between the second and fourth limit protrusions is L₅, and L₅ ≥ L₄.

7. The rotor assembly of claim 6, wherein:
the first limit protrusion is located at an end of the fourth wall surface away from the rotation axis, and the second limit protrusion is located at an end of the fourth wall surface near the rotation axis; and
the third limit protrusion is located at an end of the fifth wall surface away from the rotation axis, and the fourth limit protrusion is located at an end of the fifth wall surface near the rotation axis.

8. The rotor assembly of any of claims 1 to 7, wherein the permanent magnet protrudes from one or both ends of the mounting slot along the first direction.

9. The rotor assembly of any of claims 1 to 8, wherein each of the core segments has the third wall surface in contact with the permanent magnet, and the third wall surface is provided with a first trench for injection molding extending through the core segment along the first direction.

10. The rotor assembly of any of claims 1 to 9, further comprising:
a first injection-molded member, the first injection-molded member connecting the outer core and the inner core and filling a gap between the outer core and the inner core.

11. A motor, comprising:
the rotor assembly of any of claims 1 to 10, and
a stator assembly surrounding the rotor assembly.

12. The motor of claim 11, wherein the stator assembly comprises a stator core and a coil winding connected to the stator core, the stator core comprises a second outer peripheral wall provided with a second trench for injection molding.

13. The motor of claim 12, wherein the stator assembly further comprises a second injection-molded member encapsulating the stator core and the coil winding.

14. An air supply assembly, comprising the motor of claim 13.

15. An air treatment device, comprising the air supply assembly of claim 14.
